# EUROPEAN PATENT APPLICATION

(11) **EP 4 545 761 A1**
(43) Date of publication of application: **30.04.2025**
(21) Application number: 23205962.6
(22) Date of filing: 26.10.2023
(51) Int. Cl.: F01N 3/20, F01N 13/00

(54) **EXHAUST GAS AFTERTREATMENT SYSTEM**

(71) Applicant: WinGD Ltd., 8400 Winterthur (CH)
(72) Inventor: Fahami, Amir Reza, 8048 Zürich (CH)
(74) Representative: Hepp Wenger Ryffel AG

(57) **Abstract**

The present invention is directed to an exhaust gas aftertreatment system for a large vessel engine with at least one cylinder having an inner diameter of at least 200mm, to an internal combustion engine and to a method for reducing of a fuel emissions of an internal combustion engine.

The exhaust gas aftertreatment system (10) for an internal combustion engine (20) with at least one cylinder (21) having an inner diameter (23) of at least 200mm, which is operable at least in a conventional mode, wherein the engine is fuelled with a conventional fuel, and in a green mode, wherein the engine is fuelled with a green fuel comprises a SCR catalyst (1) and a fuel slip catalyst (2), arranged upstream or downstream the SCR catalyst (1). The exhaust gas aftertreatment system (10) further comprises a bypass-line (3) for bypassing the fuel slip catalyst (2), branching-off downstream the SCR catalyst if the fuel slip catalyst (2) is arranged downstream the SCR catalyst (1) and turning in upstream the SCR catalyst (1) if the fuel slip catalyst (2) is arranged upstream the SCR catalyst (1), and a bypass adjustment device (4) for setting the throughput of the bypass-line (3) and/or the fuel slip catalyst (2). The exhaust gas aftertreatment system (10) comprises a control unit (5) for controlling the throughput of the bypass-line (3) and/or the fuel slip catalyst (2), in particular depending on a green fuel content of the exhaust gas, a sulphur content of the exhaust gas, a temperature of the exhaust gas, a temperature of the fuel slip catalyst (2), a pressure and/or an engine load.

## Description

The present invention is directed to an exhaust gas aftertreatment system for a large vessel engine with at least one cylinder having an inner diameter of at least 200mm, to an internal combustion engine and to a method for reducing of a fuel emissions of an internal combustion engine.

The invention relates to the technical field of combustion engines and the reduction of their emissions.

In particular, the invention is related to internal combustion engines which may be fuelled with a "green fuel", such as LNG, ammonia or methanol, which can be operated with a back-up fuel of a conventional type such as diesel.

The present invention preferably relates to an internal combustion engine like a large marine or ship engine or a stationary engine whose cylinders have an inner diameter of at least 200 mm. The engine may be a four-stroke engine and preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM (4-stroke) and more preferably below 200 RPM (2-stroke) which indicates the designation of low speed engines.

Fuel can be conventional fuels, such a s diesel or marine diesel oils or heavy fuel oils or emulsions or slurries or green fuels, such as ammonia, methanol or ethanol as well as gases like liquid natural gas (LNG) liquid petrol gas (LPG) and so on.

Further possible fuels which might be used: LBG (Liquefied Bio-gas), Biological Fuels (e. g. Oil obtained from algae), Hydrogen, Synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing rules such as IMO Tier III.

The IMO emission standards commonly referred to as Tier I ... III standards inter alia define the NOₓ emission standards for existing and new marine engines.

For large ships the emissions requirements have been increasing, in particular with regard to the nitrogen oxide emissions. Thus, there is a need to reduce the amount of nitrogen oxides in the exhaust gas emitted by the internal combustion engines of these ships.

SCR (selective catalytic reduction) technology is used to reduce the level of nitrogen oxides (NOₓ) in an exhaust gas of a combustion engine. SCR is commonly used in land based engines, e.g. heavy duty vehicles, industrial plants and other applications. SCR technology has also been used in marine environments in combination with two-stroke diesel engines. Due to regulatory requirements for said marine diesel engines and land based engines, there is an increased need for efficient SCR systems.

SCR may be based on the reduction of nitrogen oxides in an exhaust gas with ammonia (NH₃) in an SCR catalyst. Ammonia may be generated by injecting an ammonia precursor substance, such as a urea solution, into the exhaust gas of the combustion engine. The urea solution for example is sprayed via nozzles into the hot exhaust gas, where the liquid urea solution reacts to ammonia, carbon dioxide and water vapour. The ammonia then reduces the nitrogen oxides under the influence of a catalyst in an SCR reactor to nitrogen (N₂) and water (H₂O).

It is desirable to minimise emissions of ammonia gas because ammonia is hazardous. Thus, ammonia cannot be simply vented to the atmosphere/surroundings, in particular, when the fuel is ammonia.

Whereas at least a part of escaping ammonia is partially consumed in the NOx reduction reaction in the SCR, an excess of ammonia may need a special treatment. Hence an ammonia reduction system (preferably, based on the ammonia slip catalyst - ASC - a particular case of the oxidation catalyst - OC) may be needed downstream of the SCR.

ASCs are prone to sulphur poisoning.

Also, other green fuels, which avoid emission of CO2, may cause unwanted emissions. For example, during combustion of methanol, formaldehydes and HCN may emerge.

EP 3 670 856 A1 discloses an exhaust gas aftertreatment system comprises a first catalyst and a second catalyst, wherein the first catalyst may have a chemical composition different from the second catalyst. The first and the second catalyst may be serially arranged and the exhaust gas aftertreatment system comprises a control unit for controlling individually the throughput through the catalysts.

DE102017011300A1 discloses an exhaust system for an internal combustion engine of a motor vehicle. An oxidation catalyst is arranged downstream of the first SCR catalyst and upstream of the second SCR catalyst in the exhaust system. The exhaust system has a bypass line via which exhaust gas can be fed to the second SCR catalytic converter while bypassing the oxidation catalytic converter.

US9624874 B2 discloses an exhaust gas recirculation apparatus including an engine, a suction line, an exhaust line and a post-processing unit. A circulation line guides a part of the exhaust gas to the suction line from a downstream side of the post-processing unit. A bypass line branches off from an upstream side of the circulation line and merges with a downstream side of the circulation line, wherein ammonia slip, which is discharged from the post-processing unit, is prevented from being guided to the suction line.

It is therefore an object of the present invention to prevent the drawbacks of the prior art and to create an exhaust gas aftertreatment system, an internal combustion engine and a method for reducing green fuel emissions of an internal combustion engine ensuring a compact design and reduced operational costs.

The object is achieved by an exhaust gas aftertreatment system for an internal combustion engine with at least one cylinder having an inner diameter of at least 200mm, which is operatable at least in a conventional mode, wherein the engine is fuelled with a conventional fuel, and in a green mode, wherein the engine is fuelled with a green fuel.

A conventional fuel is a fuel such as diesel, which causes CO2 emission.

Within this application a "green fuel" is a fuel that is carbon free, carbon neutral and/or which does not cause emission of additional CO2. Carbon content may be emitted also from green fuels if it comes from the carbon already being in the atmosphere and not from fossil deposits under the ground, like oil.

Ammonia for example does not contain any carbon molecule so it is carbon free.

Methanol is considered as carbon neutral when the carbon content comes from a carbon capture technology.

Theoretically, methanol may also be produced from treatment of petroleum, such it is not conserved to be a green fuel.

For combustion of a green fuel, a pilot injection, or example of conventional fuel, might be necessary.

Hence, also for a green fuel, like ammonia or methanol, a small amount of diesel fuel may be injected into the cylinder in order to help the combustion of methanol or ammonia.

The exhaust gas aftertreatment system comprises a SCR catalyst, a fuel slip catalyst, arranged upstream or downstream the SCR catalyst and a bypass-line for bypassing the fuel slip catalyst. The bypass-line branches off downstream the SCR catalyst if the fuel slip catalyst is arranged downstream the SCR catalyst and turns in upstream the SCR catalyst if the fuel slip catalyst is arranged upstream the SCR catalyst.

The bypass line provides for bypassing only the fuel slip catalyst, such that exhaust gas is guided through the SCR catalyst or through the SCR catalyst and the fuel slip catalyst.

Within this context the terms upstream and downstream refer to the flow direction of the exhaust gas emerging from the cylinder.

A fuel slip catalyst is a catalyst which removes or reduces residuals of the green fuel. These residuals may comprise the green fuel itself, for example ammonia residuals, or substances which are produced during combustion of the green fuel, such as formaldehyde or HCN which may arise during methanol combustion or treatment in the SCR.

The fuel slip catalyst may also be adapted to remove or reduce substances which may be produced when exhaust gas due to combustion of a green fuel passes a further catalyst, such as the SCR catalyst. For example, Formaldehyde (CH2O) may be formed by methanol exposure to an SCR catalyst. Hydrogen cyanide (HCN) may be generated by the reaction of Formaldehyde with the dose ammonia on the SCR.

The exhaust gas aftertreatment system comprises a bypass adjustment device for setting the throughput of the bypass-line and/or the fuel slip catalyst.

The exhaust gas aftertreatment system further comprises a control unit for controlling the throughput of the bypass-line and/or the fuel slip catalyst.

The control unit may be adapted to set the throughput depending on a green fuel content of the exhaust gas, a sulphur content of the exhaust gas, a temperature of the exhaust gas, a temperature of the fuel slip catalyst, a pressure and/or an engine load.

The green fuel content may correspond to a green fuel slip which escapes the cylinder, for example after uncomplete combustion. However, slip can also occur in case of complete combustion. In this case the fuel slip happens from the slip of the fuel remained in the sack hole volume of the injector.

The control unit may comprise inlet lines for receiving data being related to the green fuel content of the exhaust gas, the sulphur content of the exhaust gas, the temperature of the exhaust gas, the temperature of the fuel slip catalyst, pressure, regulatory level and/or the engine load.

The control unit may be part of an engine control unit for controlling operation of the internal combustion engine.

The fuel slip catalyst may only be needed when the engine is operated in the green mode as otherwise no green fuel slip arises.

On the other hand, the fuel slip catalyst may not be allowed to be impinged with exhaust gas, when the engine is operated with conventional fuel, in particular a fuel having a high sulphur content of above 0.1%wt.

However, as any content of sulphur may harm the catalyst, even 10 ppm, which is the case in the auto industry, preferably, the use of the fuel slip catalyst is avoided whenever possible.

The process of chemical aging of a catalyst, for example by exposure to sulphur, decreases its useful life span. Preferably, a catalyst is operative at least 5 years, which is a typical interval of the service of a marine vessel.

The bypass-line ensures that exhaust must not be passed through the fuel slip catalyst, whereas being passed through the SCR catalyst.

For example, if the internal combustion engine is a dual fuel engine which may be operated with diesel and ammonia, the fuel slip catalyst may be an AOC, which may be bypassed in the diesel mode.

At certain operational modes the green fuel slip, for example an ammonia slip, is not expected to exceed a regulatory level. Hence, at these modes, the control unit may be adapted to bypass the fuel slip catalyst to reduce the lifetime consumption.

The exhaust after treatment system may comprise a temperature sensor for providing data representative for the temperature of the fuel slip catalyst.

The exhaust after treatment system may comprise a pressure sensor for providing data representative for the pressure of the exhaust gas, which may be representative for the load.

Typically, fuel slip catalysts such as an AOC, only develop their catalytic effect at an elevated temperature, for example at a temperature of above 200°C. The temperature sensor may provide data to the control unit, which may be adapted to allow a throughput to the fuel slip catalyst, especially at conservable or full load, only when the fuel slip catalyst has a temperature above a predetermined temperature, for example the respective light-off temperature, in particular at least 200°C.

The control unit may be adapted to allow a throughput to the fuel slip catalyst in case the internal combustion engine is operated in green mode and in case the temperature of the fuel slip catalyst is above the respective light-off temperature, in particular above 200°C.

Alternatively, or additionally, the control unit may be adapted to allow a throughput to the fuel slip catalyst in case the internal combustion engine is operated in green mode and during a load, when no fuel slip occurs, in particular when the engine is operated at a load below 80%, preferably below 75%, more preferably below 60%, more preferably below 50%.

When the internal combustion engine is operated in green mode and in case the temperature of the fuel slip catalyst is above 200°C, the fuel slip catalyst may remove or reduce fuel residuals of the green fuel.

When the internal combustion engine is operated in green mode and in case the internal combustion engine is operated at a load, when no fuel slip occurs, no green fuel residuals arise and have to be removed. Exhaust gas may be guided through the fuel slip catalyst anyway to warm up the fuel slip catalyst.

In case the internal combustion engine is operated in the conventional mode the control unit may be adapted to bypass the fuel slip catalyst.

The control unit may be adapted to provide a warning to the operator in case the internal combustion engine is operated in the green mode at a load when fuel slip happens, for example at a load above 75%, and the fuel slip catalyst still has a low temperature.

The control unit may provide for showing a warning to the operator that a fuel slip may arise before the light-off temperature of the fuel slip catalyst, for example an ASC or OC, is achieved.

The control unit may be adapted to provide a warning to the operator in case the fuel slip catalyst still has a low temperature, and the internal combustion engine is going to be operated in the green mode at a load when fuel slip happens, for example at a load above 75%, and the fuel slip catalyst still has a low temperature,

The control unit may be adapted to provide for showing a warning, for example of the type "if your raise the engine load further, it may result in higher than emission limit of NH3-slip".

The control unit may be adapted to receive a confirmation of the operator if he wants to raise the engine load further without waiting for light-off temperature.

The exhaust gas aftertreatment system may comprise a tempering arrangement for warming up the fuel slip catalyst to a temperature, preferably of at least 200°C, and/or for keeping a temperature, preferably of at least 200°C, of the fuel slip catalyst.

In particular, the exhaust gas aftertreatment system may comprise tempering arrangement comprising a thermostatic device for ensuring a temperature of the fuel slip catalyst in a preset temperature range, preferably at least 150°C.

The thermostatic device may comprise a temperature setting arrangement and/or a cooling means.

The control unit may be adapted to control the tempering arrangement, in particular to set a temperature of the fuel slip catalyst.

The control unit may comprise an inlet line for receiving data and/or may have a storage for storing data, the data being related to a preset temperature and/or a preset temperature range in order to set and/or to keep the temperature of the fuel slip catalyst accordingly.

The tempering arrangement may comprise a heat exchanger which uses exhaust gas from the bypass line, from the SCR catalyst and/or from an exhaust receiver for temperature regulation, in particular as a temperature control medium.

Exhaust gas guided through the bypass line, through the SCR catalyst and/or through an exhaust receiver, in particular during conventional mode, may be used for heating up the fuel slip catalyst. The fuel slip catalyst will then be prepared for use when the internal combustion engine is switched to the green mode.

The tempering arrangement may comprise a separate heating device.

The separate heating device may comprise a heat exchanger using a temperature control medium which may be heated outside the exhaust gas aftertreatment system.

The separate heating device may be an electrical heating device.

The tempering arrangement may comprise a thermal insulating cover, such as an insulation housing. The housing may encompass the fuel slip catalyst and a further part of the internal combustion engine such as the SCR catalyst, the bypass line and/or an exhaust gas collector.

The temperature setting device may further comprise a temperature guiding contact wall between the fuel slip catalyst and a further part of the internal combustion engine such as the SCR catalyst, the bypass line and or an exhaust gas collector.

The temperature guiding contact wall may be made of or comprise a material having a thermal conductivity of at least 15 W/(mK), in particular a metal, for example stainless steel or carbon steel.

The temperature guiding contact wall may comprise cavities for guiding a temperature control medium.

The fuel slip catalyst may be an oxidation catalyst (OC), in particular an ammonia slip catalyst (ASC). The fuel slip catalyst eliminates the fuel slip and it's by-products from combustion or products generated in an upstream catalyst such as the SCR catalyst.

The fuel slip catalyst may be an ASC and may comprise cordierite or metallic monolith, metallic foam, or similar material, preferably either coated on a substrate or in extruded form.

The fuel slip catalyst may be a diesel oxidation catalyst and may comprise PGM, containing Platinum, Palladium and Rhodium.

A diesel oxidation catalyst may oxidize the methanol or formaldehyde slip upstream the SCR. A diesel oxidation catalyst may be also placed downstream the SCR to eliminate formaldehyde and HCN before the exhaust gas escapes to the atmosphere.

The bypass adjustment device may comprise at least one valve arranged upstream and/or downstream the fuel slip catalyst and/or at least one valve arranged in the bypass-line.

The bypass adjustment device may comprise at least one three-way valve for guiding exhaust either to the bypass line or to the fuel slip catalyst.

The exhaust gas aftertreatment system may comprise a main bypass line and main bypass adjustment device for bypassing the SCR, the fuel slip catalyst and the bypass line. The main bypass allows bypassing both catalysts.

The main bypass may be needed to bypass the SCR-system in cases when there is no need of operation with regard to emission legislation (eg. Tier II in Ammonia mode without Ammonia-slip), when the exhaust temperature is too low for SCR-operation (eg. Diesel mode below 10%) and/or when the SCR-system is damaged (eg. when catalyst elements are broken), in particular to prevent damage of the turbocharger.

Bypassing may also be allowed for maintenance purpose for certain concepts (eg. SCR-off engine) in order to prevent exhaust leakage to the engine room during maintenance work on the open reactor.

The control unit may be adapted to set the main bypass adjustment for opening and/or closing the main bypass line.

The object is also achieved by an internal combustion engine having at least one cylinder having an inner diameter of at least 200mm, which is operable at least in a conventional mode, wherein the engine is fuelled with a conventional fuel, and in a green mode, wherein the engine is fuelled with a green fuel, and which comprises an exhaust gas aftertreatment system as described above.

The internal combustion engine may comprise a turbocharger with a turbine and a compressor. The SCR catalyst, the fuel slip catalyst and the bypass-line may be arranged upstream the turbine.

Alternatively, the SCR catalyst may be arranged downstream the turbine and upstream of a funnel.

The internal combustion engine may be adapted to be fuelled with ammonia or with methanol.

The object is also achieved by a method for reducing a fuel emission, such as ammonia emissions, of an internal combustion engine, preferably as described above, having at least one cylinder having an inner diameter of at least 200mm, which is operable at least in a conventional mode, wherein the engine is fuelled with a conventional fuel, and in a green mode, wherein the engine is fuelled with a green fuel, in an exhaust gas aftertreatment system as described above.

The exhaust gas is discharged through an outlet of a cylinder of the internal combustion engine.

The method comprises the steps of setting a bypass adjustment device in order to either guiding exhaust through an SCR catalyst and a fuel slip catalyst, arranged upstream or downstream the SCR catalyst, or only through the SCR catalyst.

The setting step may depend on a fuel content of the exhaust gas, a sulphur content of the exhaust gas, a temperature of the exhaust gas, a temperature of the fuel slip catalyst, a pressure and/or an engine load.

The method may comprise the step of allowing a throughput to the fuel slip catalyst in case that the engine is operated in green mode and that the temperature of the fuel slip catalyst is above 200°C and/or in case that the engine is operated in green mode and that the engine is operated at a load below 60%.

The method may comprise the step of sensing the temperature of the fuel slip catalyst.

The method may comprise the step of setting a temperature of the fuel slip catalyst.

The method may comprise the step of keeping a temperature of the fuel slip catalyst.

The temperature may be set and/or kept by guiding green fuel through the fuel slip catalyst during a load without fuel slip for warming up the fuel slip catalyst or by using a temperature setting device, such as a heat exchanger, a heating device or an insulating housing.

The method may comprise the step of using exhaust gas from the bypass line for warming the fuel slip catalyst from the SCR catalyst and/or from an exhaust receiver, in particular as a temperature control medium in a heat exchanger.

The method may comprise the step of providing a warning signal, in cases when a fuel slip occurs or is expected, for example when the load is rising, and the fuel slip catalyst has not yet reached the light-off temperature.

In the following, the invention is further explained in embodiments by means of figures, wherein functionally similar parts have the same reference number.
- Figure 1: shows a schematic view of an internal combustion engine with a first example of an exhaust gas aftertreatment system;
- Figure 2: shows a schematic view of an internal combustion engine with a second example of an exhaust gas aftertreatment system;
- Figure 3: shows a schematic view of an internal combustion engine with a third example of an exhaust gas aftertreatment system;
- Figure 4: shows a schematic view of an arrangement of a fourth example of an exhaust gas aftertreatment system;
- Figure 5: shows a schematic view of an arrangement of a fifth example of an exhaust gas aftertreatment system;
- Figure 6: shows a schematic view of an arrangement of a sixth example of an exhaust gas aftertreatment system;
- Figure 7: shows a schematic view of an arrangement of a seventh example of an exhaust gas aftertreatment system;
- Figure 8: shows a perspective view of a further example of an exhaust gas aftertreatment system.

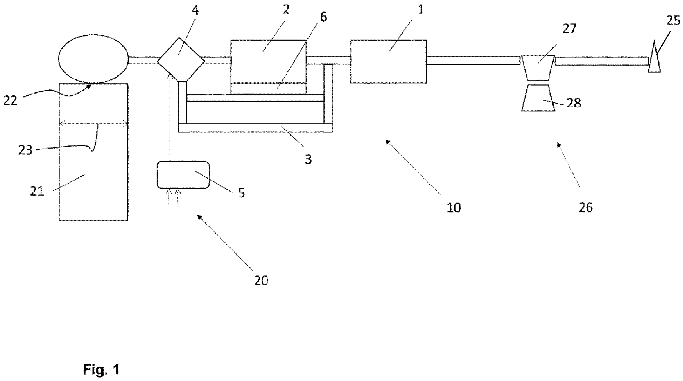

Figure 1 shows a schematic view of an internal combustion engine 20 with a first example of an exhaust gas aftertreatment system 10. The internal combustion engine 10 comprises a cylinder 21 having an inner diameter 23 of at least 200mm.

The exhaust gas aftertreatment system 10 comprises an SCR catalyst 1, a fuel slip catalyst 2 arranged downstream the SCR catalyst 1, a bypass-line 3 for bypassing the fuel slip catalyst 2, turning in upstream the SCR catalyst 1, such that the bypass-line 3 bypasses only the fuel slip catalyst 2 and not the SCR catalyst 1.

A bypass adjustment device 4 is adapted to set the throughput of the bypass-line 3 and the fuel slip catalyst 2.

The exhaust gas aftertreatment system 10 comprises a control unit 5 for controlling the throughput of the bypass-line 3 and the fuel slip catalyst 2.

The exhaust gas aftertreatment system 10 comprises a tempering arrangement 6, in this example comprising a heat exchanger which uses exhaust gas from the bypass line 3 for temperature regulation of the fuel slip catalyst 2.

Downstream the exhaust gas aftertreatment system 10 the internal combustion engine 20 comprises a turbocharger 26 with a turbine 27 and a compressor 28.

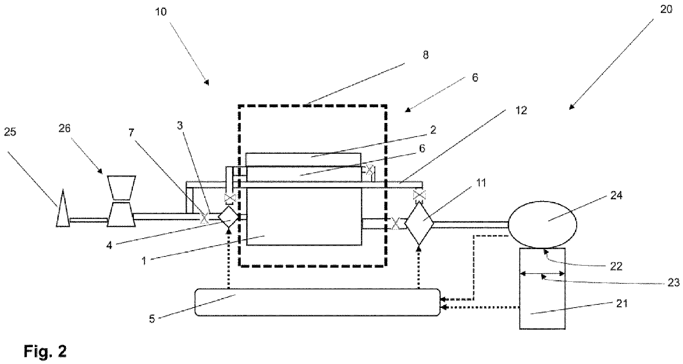

Figure 2 shows a schematic view of an internal combustion engine 20 with a second example of an exhaust gas aftertreatment system 10, wherein the fuel slip catalyst 2 is also arranged downstream the SCR catalyst 1. The exhaust gas aftertreatment system 10 comprises a tempering arrangement 6, in this example comprising a heat exchanger which uses exhaust gas from the SCR catalyst 1 for temperature regulation of the fuel slip catalyst 2.

The bypass adjustment device 4 comprises a valve 7, which when closed prevents throughput through the bypass-line 3 to the funnel 25.

The second example of an exhaust gas aftertreatment system 10 comprises a main bypass adjustment device 11 and a main bypass line 12, for bypassing the SCR catalyst 1 and the fuel slip catalyst 2.

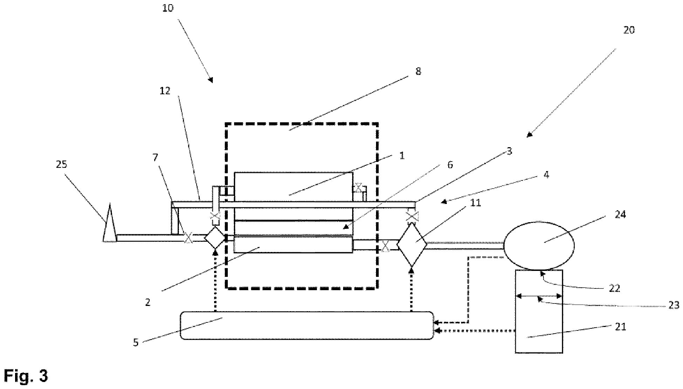

Figure 3 shows a schematic view of an internal combustion engine 20 with a third example of an exhaust gas aftertreatment system 10.

In this example the fuel slip catalyst 2 may be used arranged upstream the SCR catalyst 1.

The fuel slip catalyst 2 is attached to the SCR catalyst 1 to allow heat transfer from SCR reactor (like Figure 2).

In this example the exhaust gas aftertreatment system 10 also comprises a tempering arrangement 6 with a heat exchanger which uses exhaust gas from the SCR catalyst 1 for temperature regulation of the fuel slip catalyst 2.

In this case the main bypass adjustment device 11 also allows for guiding exhaust gas only though the fuel slip catalyst 2 and not through the SCR catalyst 1 or for guiding exhaust gas directly to the funnel 25 via the main bypass line 12 while bypassing the SCR catalyst 1 and fuel slip catalyst 2.

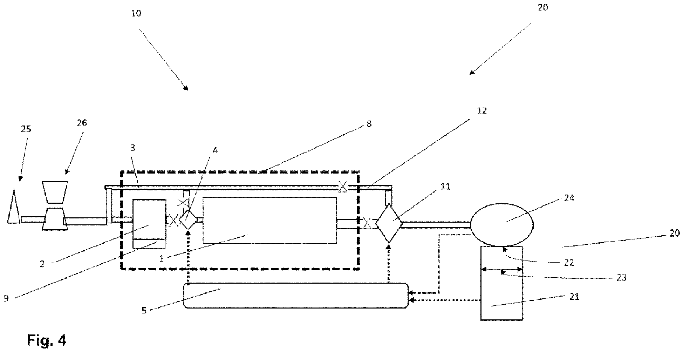

Figure 4 shows a schematic view of an internal combustion engine 20 with a fourth example of an exhaust gas aftertreatment system 10, wherein the fuel slip catalyst 2 is also arranged downstream the c.

The fuel slip catalyst 2 and the fuel slip catalyst 2 are arrange in an insulating housing 8.

Additionally, the fuel slip catalyst 2 comprising a separate heating device 9.

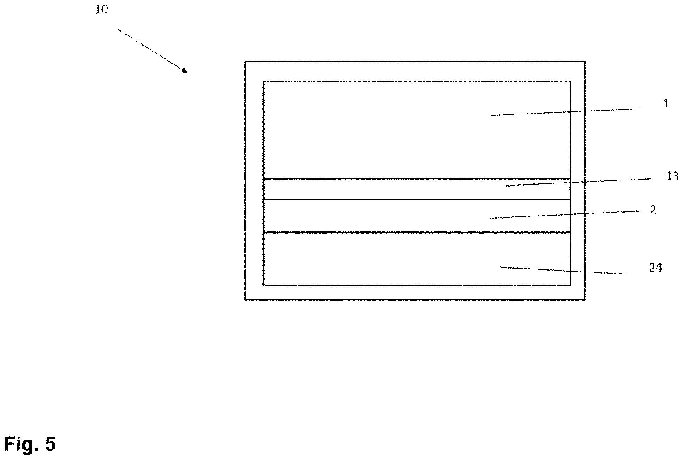

Figure 5 shows a schematic view of an arrangement of a fifth example of an exhaust gas aftertreatment system 10.

The fuel slip catalyst 2 is arranged directly above the exhaust gas receiver 24. A heat conducting layer 13 is arranged between the fuel slip catalyst 2 and the SCR catalyst 1 such that exhaust gas guided through the SCR catalyst 1 may warm up the fuel slip catalyst 2.

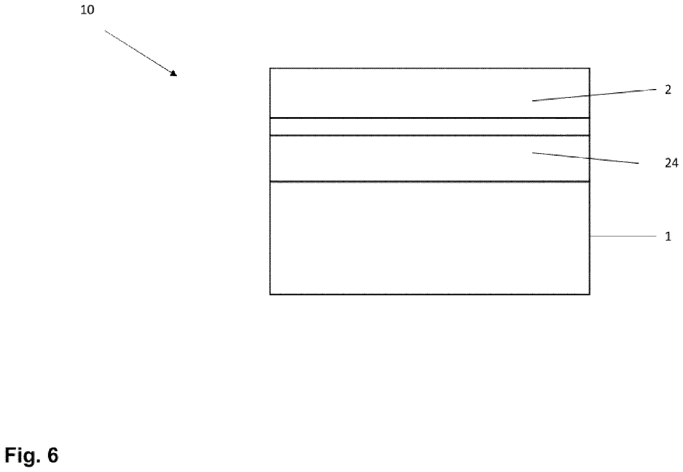

Figure 6 shows a schematic view of an arrangement of a sixth example of an exhaust gas aftertreatment system 10.

The fuel slip catalyst 2 is arranged directly above the exhaust gas receiver 24 and the SCR catalyst 1 is arranged directly below the exhaust gas receiver 24. A heat conducting layer 13 is arranged between the fuel slip catalyst 2 and the exhaust gas receiver 24, such that exhaust gas in the exhaust gas receiver 24 may warm up the fuel slip catalyst 2.

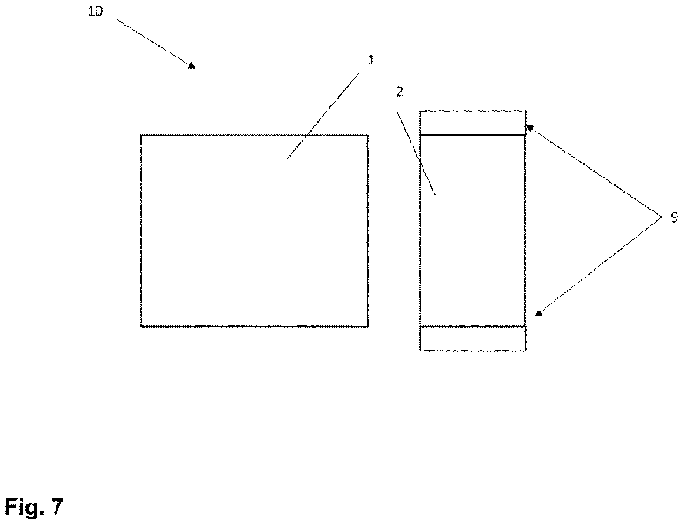

Figure 7 shows a schematic view of an arrangement of a seventh example of an exhaust gas aftertreatment system 10. The fuel slip catalyst 2 is embedded in a heating device 9.

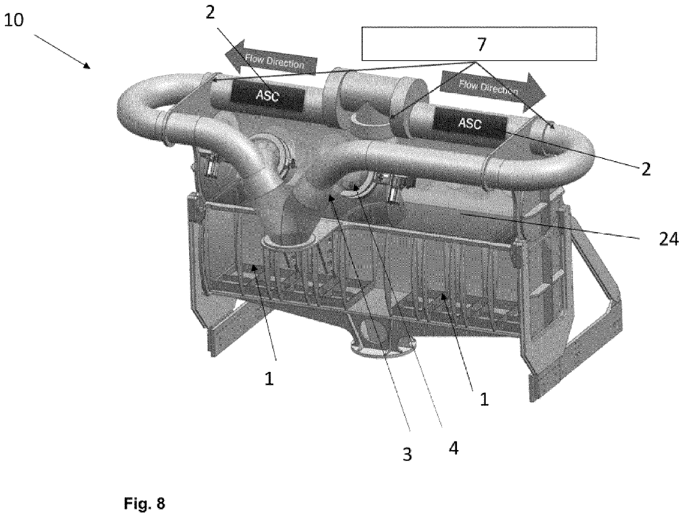

Figure 8 shows a perspective view of a further example of an exhaust gas aftertreatment system 10.

Exhaust gas is collected in the exhaust receiver 24. From there the exhaust gas is guided to SCR reactors 1 arranged below the exhaust receiver 24. Depending on the setting of the bypass adjustment device 4, exhaust gas is either guided through the fuel slip catalysts 2, in this case arranged above the exhaust receiver 24, or directly to the turbocharger (not shown in the figure) via the bypass line 3.

The fuel slip catalysts 2 may be arranged in heat conducting contact to the exhaust receiver 24, as shown in Figure 6.

## Claims

1. Exhaust gas aftertreatment system (10) for a internal combustion engine (20) with at least one cylinder (21) having an inner diameter (23) of at least 200mm, which is operable at least in a conventional mode, wherein the engine is fuelled with a conventional fuel, and in a green mode, wherein the engine is fuelled with a green fuel,
comprising
- a SCR catalyst (1),
- a fuel slip catalyst (2), arranged upstream or downstream the SCR catalyst (1),
- a bypass-line (3) for bypassing the fuel slip catalyst (2), branching-off downstream the SCR catalyst if the fuel slip catalyst (2) is arranged downstream the SCR catalyst (1) and turning in upstream the SCR catalyst (1) if the fuel slip catalyst (2) is arranged upstream the SCR catalyst (1),
- a bypass adjustment device (4) for setting the throughput of the bypass-line (3) and/or the fuel slip catalyst (2),
wherein the exhaust gas aftertreatment system (10) comprises a control unit (5) for controlling the throughput of the bypass-line (3) and/or the fuel slip catalyst (2),
in particular depending on a green fuel content of the exhaust gas, a sulphur content of the exhaust gas, a temperature of the exhaust gas, a temperature of the fuel slip catalyst (2), a pressure and/or an engine load.

2. Exhaust gas aftertreatment system (10) according to claim 1, wherein the exhaust after treatment system comprises a temperature sensor for providing data representative for the temperature of the fuel slip catalyst (2).

3. Exhaust gas aftertreatment system (10) according to claim 1 or 2, wherein the control unit (5) is adapted to allow a throughput to the fuel slip catalyst (2)
- in case that the engine is operated in green mode and that the temperature of the fuel slip catalyst is above the light-off temperature, in particular 200°C and/or
- in case that the engine is operated in green mode and during a load, when no fuel slip occurs, in particular when the engine is operated at a load below 80%, preferably below 75%, more preferably below 60%, more preferably below 50%.

4. Exhaust gas aftertreatment system (10) according to any of claims claim 1 to 3, wherein the exhaust gas aftertreatment system (10) comprises a tempering arrangement (6) for warming up the fuel slip catalyst (2) to a temperature, preferably of at least 200°C, and/or for keeping a temperature, preferably of at least 200°C, of the fuel slip catalyst (2).

5. Exhaust gas aftertreatment system (10) according to claim 4, wherein the tempering arrangement (6) comprises at least one or a combination selected of
- a heat exchanger which uses exhaust gas from the bypass line (3), from the SCR catalyst (1) and/or from an exhaust receiver (24) for temperature regulation, in particular as a temperature control medium,
- a separate heating device (9),
- an insulating housing.

6. Exhaust gas aftertreatment system (10) according to one of the preceding claims, wherein the fuel slip catalyst (2) is an oxidation catalyst, in particular an ammonia slip catalyst.

7. Exhaust gas aftertreatment system (10) according to one of the preceding claims, wherein the fuel slip catalyst (2) comprises cordierite or metallic monolith, metallic foam, or similar material, in particular either coated on a substrate or in extruded form.

8. Exhaust gas aftertreatment system (10) according to one of the preceding claims, wherein the bypass adjustment device (4) comprises at least one valve (7) arranged upstream and/or downstream the fuel slip catalyst (2) and/or at least one valve arranged in the bypass-line (3).

9. Internal combustion engine (20) having at least one cylinder (21) having an inner diameter (23) of at least 200mm, which is operable at least in a conventional mode, wherein the engine is fuelled with a conventional fuel, and in a green mode, wherein the engine is fuelled with a green fuel, comprising an exhaust gas aftertreatment system (10) as claimed in claims 1-8.

10. Internal combustion engine (20) according to claim 9, wherein the internal combustion engine (20) comprises a turbocharger (26) with a turbine (27) and a compressor (28), and wherein the SCR catalyst (1), the fuel slip catalyst (2) and the bypass-line (3) are arranged upstream the turbine.

11. Internal combustion engine (20) according to claim 9 or 10, which is adapted to be fuelled with ammonia or with methanol.

12. Method for reducing a fuel emission, such as ammonia emissions, of an internal combustion engine (20) having at least one cylinder (21) having an inner diameter (23) of at least 200mm, which is operable at least in a conventional mode, wherein the engine is fuelled with a conventional fuel, and in a green mode, wherein the engine is fuelled with a green fuel, in an exhaust gas aftertreatment system (10) according to one of claims 1-8, wherein exhaust gas is discharged through an outlet (22) of a cylinder (21) of an internal combustion engine (20) having at least one cylinder (21) having an inner diameter (23) of at least 200mm, comprising the steps of setting a bypass adjustment device (4) in order to either guiding exhaust through an SCR catalyst (1) and a fuel slip catalyst (2), arranged upstream or downstream the SCR catalyst (1), or only through the SCR catalyst (1), in particular depending on a green fuel content of the exhaust gas, a sulphur content of the exhaust gas, a temperature of the exhaust gas, a temperature of the fuel slip catalyst (2), a pressure and/or an engine load.

13. Method according to claim 12, comprising the step of allowing a throughput to the fuel slip catalyst (2)
- in case that the internal combustion engine (20) is operated in green mode and that the temperature of the fuel slip catalyst is above the light-off temperature, in particular above 200°C, and/or
- in case that the internal combustion engine (20) is operated in green mode and during a load, when no fuel slip occurs, when the engine is operated at a load below 80%, preferably below 75%, more preferably below 60%, more preferably below 50%.

14. Method according to any of claim 12 or claim 13, comprising the step of setting a temperature of the fuel slip catalyst (2).

15. Method according to any of claims 12-14, wherein exhaust gas from the bypass line is used for warming the fuel slip catalyst (2) from the SCR catalyst (1) and/or from an exhaust receiver (24), in particular as a temperature control medium in a heat exchanger.
